# EUROPEAN PATENT SPECIFICATION

(11) **EP 1 985 939 B1**
(45) Date of publication and mention of the grant of the patent: **24.01.2018**
(21) Application number: 07708353.3
(22) Date of filing: 13.02.2007
(51) Int. Cl.: F24F 11/00, F25B 49/02

(54) **AIR CONDITIONER**
KLIMAANLAGE
CLIMATISEUR

(30) Priority: 17.02.2006 JP 2006041213
(43) Date of publication of application: 29.10.2008
(73) Proprietor: DAIKIN INDUSTRIES, LTD., Osaka-shi, Osaka 530-8323 (JP)
(72) Inventor: KOTANI, Takuya, Sakai-shi, Osaka 591-8511 (JP); HORI, Kikuji, Sakai-shi, Osaka 591-8511 (JP); MATSUOKA, Shinya, Sakai-shi, Osaka 591-8511 (JP)
(74) Representative: Hoffmann Eitle
(86) International application number: PCT/JP2007/052462
(87) International publication number: WO 2007/094285

(56) References cited:
- WO-A1-03/073025
- WO-A1-2004/109192
- JP-A- H0 227 176
- JP-A- S6 325 457
- JP-A- 11 014 123
- JP-A- H01 262 386
- JP-A- H01 262 387
- JP-A- H05 157 374
- JP-A- H10 220 884
- JP-A- 2001 324 231
- JP-A- 2004 101 012
- JP-A- 2004 205 143
- US-A- 4 384 462

## Description

### TECHNICAL FIELD

The present invention relates to an outdoor unit of an air conditioner, an air conditioner, and a compressor startup method in an outdoor unit of an air conditioner.

### BACKGROUND ART

Conventionally, in a facility such as the outdoor unit of an air conditioner that is disposed with plural constant speed compressors and at least one variable speed compressor described in Patent Document 1, the operating capacities of the compressors are brought closer to a target capacity by the following procedure during startup of the compressors.

First, the variable speed compressor starts up and is raised to a predetermined capacity (about 50% of its target capacity). Thereafter, the plural constant speed compressors are sequentially raised one at a time. The variable speed compressor performs capacity control so as to vary its consumed power linearly in correspondence to fluctuations in the amount of air that is used that arise when the individual constant speed compressors raise.
<Patent Document 1>
   JP-A No. 2001-140768
JP 401 262 387 A discloses an air conditioning system, in which a variable speed compressor starts up and is raised to a predetermined capacity, after which the plural constant speed compressors are activated.

WO2004/109192 discloses an air conditioner with a plurality of outdoor units with fixed and variable capacity compressors, disclosing the preamble of claim 1.

WO03/073025 discloses a compressor start up method for a refrigeration unit having a plurality of constant capacity compressors and a variable capacity compressor.

US 4,384,462 A1 relates to a multiple-compressorsrefrigeration system in which a system controller is connected to a pressure response transducer that measures the suction pressure of the system and compares this measured suction pressure to desired suction pressure and selects one of the pluralities of 2ⁿ available compressor operating states in accordance with the measured differences.

### DISCLOSURE OF THE INVENTION

### PROBLEM THAT THE INVENTION IS TO SOLVE

However, in the facility of Patent Document 1, the plural constant speed compressors must stand by without starting up until the variable speed compressor raises to the predetermined capacity, and the variable speed compressor performs capacity control each time the individual constant speed compressors raise, so a long amount of time is required until the outdoor unit finally reaches its target capacity.

It is an object of the present invention to provide an outdoor unit of an air conditioner that can quickly cause a compressor to start up, an air conditioner, and a compressor startup method in an outdoor unit of an air conditioner.

### MEANS FOR SOLVING THE PROBLEM

An outdoor unit of an air conditioner according to a first invention comprises plural constant capacity compressors, a variable capacity compressor and a controller. The plural constant capacity compressors compress refrigerant in a predetermined capacity. The variable capacity compressor is capable of having its capacity changed and compressing refrigerant. The controller sequentially causes the plural constant capacity compressors to start up and thereafter regulates the operating frequency of the variable capacity compressor.

Here, the controller sequentially causes the plural constant capacity compressors to start up and thereafter regulates the operating frequency of the variable capacity compressor, so the controller is capable of quickly performing startup of the variable capacity compressor and the constant capacity compressors in comparison to a conventional air conditioner.

An outdoor unit of an air conditioner according to a second invention comprises the outdoor unit of an air conditioner according to the first invention, wherein the controller sets an interval of the startup of the plural constant capacity compressors to 15 seconds or more.

Here, the controller sets the interval of the startup of the plural constant capacity compressors to 15 seconds or more, so the controller is capable of ensuring time for an outdoor expansion valve that is included in the outdoor unit to follow the startup of the constant capacity compressors.

An air conditioner according to a third invention is disposed with plural outdoor units. The plural outdoor units include plural constant capacity compressors, variable capacity compressors and controllers. The plural constant capacity compressors compress refrigerant in a predetermined capacity. The variable capacity compressors are capable of having their capacities changed and compressing refrigerant. The controllers sequentially cause the plural constant capacity compressors to start up and thereafter regulate the operating frequencies of the variable capacity compressor. The controllers of the individual outdoor units perform startup of the constant capacity compressors at a timing that is shifted by a predetermined amount of time with respect to the startup of the constant capacity compressors of the other outdoor units.

Here, the controllers of the individual outdoor units perform startup of the constant capacity compressors at a timing that is shifted by a predetermined amount of time with respect to the startup of the constant capacity compressors of the other outdoor units, so even when the air conditioner is disposed with plural outdoor units, the controllers are capable of quickly performing startup of the variable capacity compressors and the constant capacity compressors.

An air conditioner according to a fourth invention comprises the air conditioner according to the third invention, wherein the predetermined amount of time is 15 seconds or more.

Here, the predetermined amount of time is set to 15 seconds or more, so the controllers are capable of ensuring time for outdoor expansion valves of the outdoor units to follow the startup of the constant capacity compressors.

An air conditioner according to a fifth invention comprises the air conditioner according to the third invention, wherein the controllers of the individual outdoor units perform startup of the variable capacity compressors in time with the startup of the variable capacity compressors of the other outdoor units.

Here, the controllers of the individual outdoor units perform startup of the variable capacity compressors in time with the startup of the variable capacity compressors of the other outdoor units, so the controllers are capable of quick capacity control.

A compressor startup method in outdoor units of an air conditioner according to a sixth invention is a compressor startup method in outdoor units of an air conditioner. The outdoor units of the air conditioner are disposed with plural constant capacity compressors and variable capacity compressors. The compressor startup method includes a first step and a second step. The first step sequentially causes the plural constant capacity compressors to start up. The second step regulates the operating frequencies of the variable capacity compressors after the first step.

Here, the method sequentially causes the plural constant capacity compressors to start up and thereafter regulates the operating frequencies of the variable capacity compressors, so the method is capable of quickly performing startup of the variable capacity compressors and the constant capacity compressors in comparison to a conventional air conditioner.

### EFFECTS OF THE INVENTION

According to the first invention, the controller can quickly perform startup of the variable capacity compressor and the constant capacity compressors.

According to the second invention, the controller can ensure time for the outdoor expansion valve that is included in the outdoor unit to follow the startup of the constant capacity compressors.

According to the third invention, even when the air conditioner is disposed with plural outdoor units, the controllers can quickly perform startup of the variable capacity compressors and the constant capacity compressors.

According to the fourth invention, the controllers can ensure time for the outdoor expansion valves of the outdoor units to follow the startup of the constant capacity compressors.

According to the fifth invention, the controllers can perform quick capacity control.

According to the sixth invention, the method can quickly perform startup of the variable capacity compressors and the constant capacity compressors.

### BRIEF DESCRIPTION OF THE DRAWINGS

FIG. 1 is a diagram showing the overall configuration of an air conditioner according to an embodiment of the present invention.
FIG. 2 is a graph showing, in a time-series, the startup of constant capacity compressors and variable capacity compressors in an outdoor unit of FIG. 1.
FIG. 3 is a flowchart showing a procedure of the startup of the constant capacity compressors and the variable capacity compressors in the outdoor unit of FIG. 1.

### DESCRIPTION OF THE REFERENCE SYMBOLS

- 1: Air Conditioner
- 2a to 2c: Outdoor Units
- 3a, 3b, etc.: Indoor Units
- 4, 5: Refrigerant Communication Pipes
- 6a to 6c: Controllers
- 21a to 21c: Compression Mechanisms
- 22a to 22c, 27a to 27c, 28a to 28c: Compressors
- 24a to 24c: Outdoor Heat Exchangers
- 29a to 29c: Outdoor Expansion Valves
- 31a, 31b, etc.: Indoor Expansion Valves
- 32a, 32b, etc.: Indoor Heat Exchangers

### BEST MODE FOR CARRYING OUT THE INVENTION

### <Configuration of Air Conditioner 1>

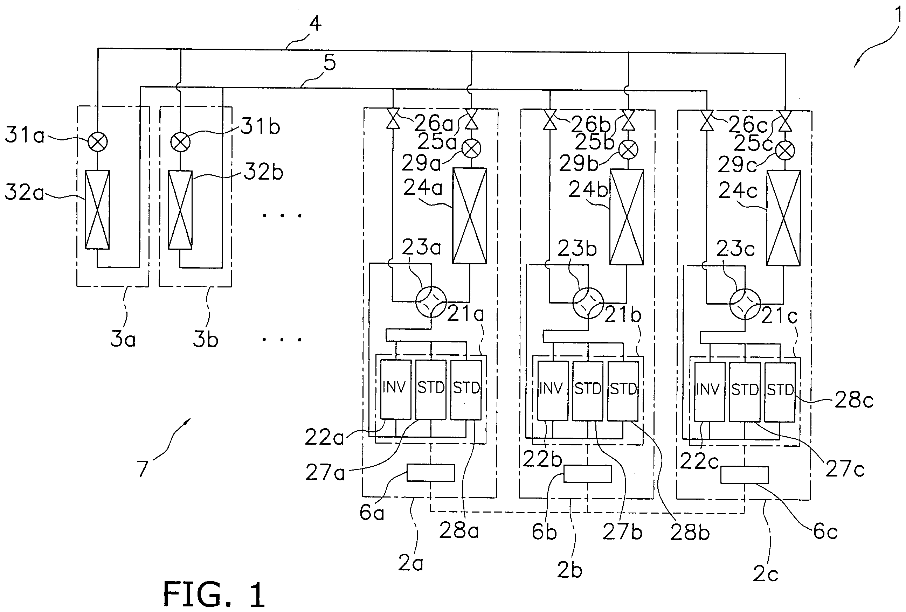

FIG. 1 shows a general refrigerant circuit diagram of an air conditioner 1 of a first embodiment of the present invention. The air conditioner 1 is used to air-condition a building or the like and is configured as a result of plural (in the present embodiment, three) air-cooling type outdoor units 2a to 2c and numerous indoor units 3a, 3b, etc. being interconnected in parallel with respect to a refrigerant liquid communication pipe 4 and a refrigerant gas communication pipe 5. Here, just two indoor units 3a and 3b are shown. The plural outdoor units 2a to 2c are disposed with compression mechanisms 21a to 21c, each of which includes one capacity-variable type variable capacity compressor 22a to 22c and plural (in the present embodiment, two) capacity-constant type constant capacity compressors 27a to 27c and 28a to 28c.

The indoor units 3a, 3b, etc. are mainly configured by indoor expansion valves 31a, 31b, etc., indoor heat exchangers 32a, 32b, etc., and pipes that interconnect these. In the present embodiment, the indoor expansion valves 31a, 31b, etc. are electrically powered expansion valves that are connected to refrigerant liquid communication pipe 4 sides (below, "liquid sides") of the indoor heat exchangers 32a, 32b, etc. in order to regulate refrigerant pressure and regulate refrigerant flow rate. In the present embodiment, the indoor heat exchangers 32a, 32b, etc. are cross fin-and-tube type heat exchangers and are devices for exchanging heat with indoor air. In the present embodiment, the indoor units 3a, 3b, etc. are disposed with indoor fans (not shown) for taking the indoor air into the insides of the units and sending out the indoor air, and the indoor units 3a, 3b, etc. are capable of exchanging heat between the indoor air and refrigerant that flows through the indoor heat exchangers 32a, 32b, etc.

The outdoor units 2a to 2c are mainly configured by compression mechanisms 21a to 21c, four-way switch valves 23a to 23c, outdoor heat exchangers 24a to 24c, liquid close valves 25a to 25c, gas close valves 26a to 26c, outdoor expansion valves 29a to 29c, and pipes that interconnect these. In the present embodiment, the outdoor expansion valves 29a to 29c are electrically powered expansion valves that are connected to refrigerant liquid communication pipe 4 sides (below, "liquid sides") of the outdoor heat exchangers 24a to 24c in order to perform regulation of refrigerant pressure and regulation of refrigerant flow rate.

Each of the compression mechanisms 21a to 21c includes one variable capacity compressor 22a to 22c and two constant capacity compressors 27a to 27c and 28a to 28c.

The variable capacity compressors 22a to 22c are devices for compressing refrigerant gas that has sucked in and are capacity-variable type compressors that are capable of having their capacities changed by inverter control and compressing refrigerant.

The constant capacity compressors 27a to 27c and 28a to 28c are devices for compressing refrigerant gas that has been sucked in and are compressors that compress refrigerant in a predetermined capacity.

The four-way switch valves 23a to 23c are valves for switching the direction of the flow of refrigerant when switching between cooling operation and heating operation such that, during cooling operation, the four-way switch valves 23a to 23c are capable of interconnecting the compression mechanisms 21a to 21c and refrigerant gas communication pipe 5 sides (below, "gas sides") of the outdoor heat exchangers 24a to 24c and interconnecting suction sides of the compression mechanisms 21a to 21c and the refrigerant gas communication pipe 5 (see the solid lines of the four-way switch valves 23a to 23c in FIG. 1) and such that, during heating operation, the four-way switch valves 23a to 23c are capable of interconnecting outlets of the compression mechanisms 21a to 21c and the refrigerant gas communication pipe 5 and interconnecting the suction sides of the compression mechanisms 21a to 21c and the gas sides of the outdoor heat exchangers 24a to 24c (see the dotted lines of the four-way switch valves 23a to 23c in FIG. 1).

The outdoor heat exchangers 24a to 24c are, in the present embodiment, cross fin-and-tube type heat exchangers and are devices for exchanging heat with the refrigerant using air as a heat source. In the present embodiment, the outdoor units 2a to 2c are disposed with outdoor fans (not shown) for taking outdoor air into the insides of the units and sending out the outdoor air, and the outdoor units 2a to 2c are capable of exchanging heat between the outdoor air and refrigerant flowing through the outdoor heat exchangers 24a to 24c.

The liquid close valves 25a to 25c and the gas close valves 26a to 26c of the outdoor units 2a to 2c are connected in parallel to the refrigerant liquid communication pipe 4 and the refrigerant gas communication pipe 5. The refrigerant liquid communication pipe 4 interconnects the liquid sides of the indoor heat exchangers 32a, 32b, etc. of the indoor units 3a, 3b, etc. and the liquid sides of the outdoor heat exchangers 24a to 24c of the outdoor units 2a to 2c. The refrigerant gas communication pipe 5 interconnects gas sides of the indoor heat exchangers 32a, 32b, etc. of the indoor units 3a, 3b, etc. and the four-way switch valves 23a to 23c of the outdoor units 2a to 2c.

### <Configuration of Controllers>

The controllers 6a to 6c are housed in the outdoor units 2a to 2c and are capable of performing the above-described operation control using just the controller (here, 6a) of the outdoor unit (here, 2a) that is set as a parent device. Additionally, the controllers (here, 6b and 6c) of the outdoor units (here, 2b and 2c) that are set as child devices are capable of transmitting operating statuses of devices such as the compression mechanisms and detection data of various types of sensors to the parent device controller 6a and functioning so as to perform operation and stop commands to devices such as the compression mechanisms by a command from the parent device controller 6a.

The controllers 6a to 6c sequentially cause the constant capacity compressors 27a to 27c and 28c to 28c to start up during heating operation of the air conditioner 1 and thereafter regulate the operating frequencies of the variable capacity compressors 22a to 22c. Thus, in comparison to a conventional air conditioner, the controllers 6a to 6c can quickly perform startup of the variable capacity compressors 22a to 22c and the constant capacity compressors 27a to 27c and 28a to 28c. That is, in a conventional air conditioner, the variable capacity compressor is once raised, and thereafter capacity control is performed by the variable capacity compressor while raising the constant capacity compressors one at a time. In contrast, in the air conditioner 1 of the present embodiment, first, the controllers 6a to 6c sequentially cause the constant capacity compressors 27a to 27c and 28a to 28c to start up and then rapidly raise the compressors to predetermined operating capacities of the constant capacity compressors 27a to 27c and 28a to 28c. Thereafter, the controllers 6a to 6c regulate the operating frequencies of the variable capacity compressors 22a to 22c to thereby regulate the total operating capacity of the outdoor units 2a, 2b and 2c to match the operating statuses of the indoor units 3a, 3b, etc. Consequently, time in which the constant capacity compressors are caused to stand by until the variable capacity compressor first reaches a predetermined operating capacity and time in which capacity control is performed by the variable capacity compressor each time the plural constant capacity compressors are raised, as in a conventional air conditioner, become unnecessary, and quick startup of the variable capacity compressors 22a to 22c and the constant capacity compressors 27a to 27c and 28a to 28c becomes possible.

The controllers 6a to 6c set the interval between the startup of the constant capacity compressors 27a to 27c and the startup of the constant capacity compressors 28a to 28c to 15 seconds or more, so the controllers 6a to 6c are capable of ensuring time for the outdoor expansion valves 29a to 29c of the outdoor units 2a to 2c to follow the startup of the constant capacity compressors 27a to 27c and 28a to 28c.

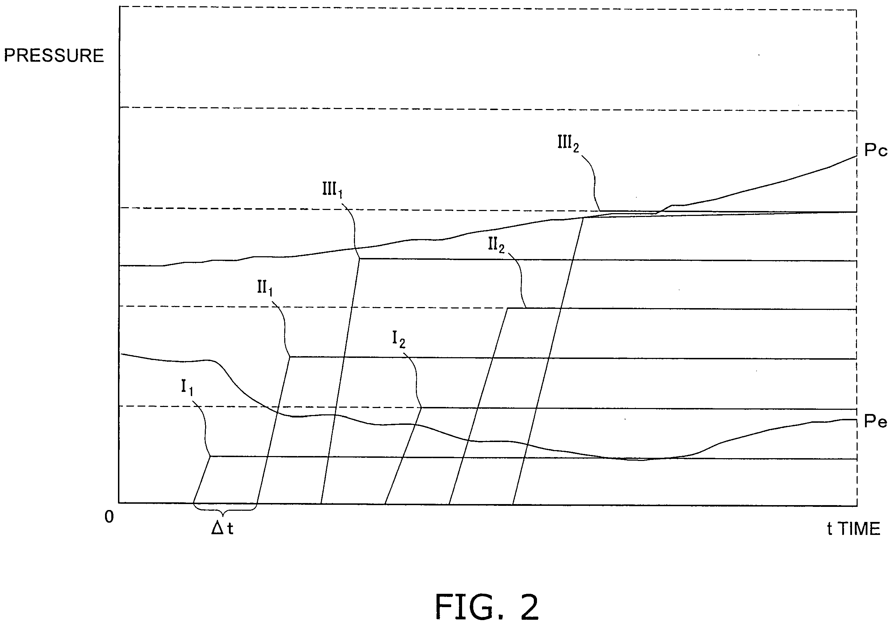

The controllers 6a to 6c of the individual outdoor units 2a to 2c perform startup of the constant capacity compressors 27a to 27c and 28a to 28c at a timing that is shifted by a predetermined amount of time Δt (see FIG. 2) with respect to the startup of the constant capacity compressors 27a to 27c and 28a to 28c of the other outdoor units 2a to 2c, so that even when the air conditioner 1 is disposed with the plural outdoor units 2a to 2c, the controllers 6a to 6c are capable of quickly performing startup of the variable capacity compressors 22a to 22c and the constant capacity compressors 27a to 27c and 28a to 28c.

For example, as shown in FIG. 2, the controller 6a of the outdoor unit 2a causes the constant capacity compressor 27a to start up (curved line I₁), then the controller 6b of the outdoor unit 2b causes the constant capacity compressor 27b to start up (curved line I₂) at a timing that is shifted by the predetermined amount of time Δt from the startup of the constant capacity compressor 27a, and thereafter the controller 6c of the outdoor unit 2c causes the constant capacity compressor 27c to start up (curved line I₃) at a timing that is shifted by the predetermined amount of time Δt from the startup of the constant capacity compressor 27b. Moreover, the controller 6a of the outdoor unit 2a causes the constant capacity compressor 28a to start up (curved line II₁) at a timing that is shifted by the predetermined amount of time Δt from the startup of the constant capacity compressor 27c, the controller 6b of the outdoor unit 2b causes the constant capacity compressor 28b to start up (curved line II₂) at a timing that is shifted by the predetermined amount of time Δt from the startup of the constant capacity compressor 28a, and the controller 6c of the outdoor unit 2c causes the constant capacity compressor 28c to start up (curved line II₃) at a timing that is shifted by the predetermined amount of time Δt from the startup of the constant capacity compressor 28b.

In this manner, the controllers 6a to 6c perform sequential startup of the constant capacity compressors 27a to 27c and 28a to 28c in the order of the curved lines I₁ to I₃ and II₁ to II₃ shown in FIG. 2, whereby the refrigerant pressure Pc in the indoor heat exchangers 32a, 32b, etc. (which become condensers during heating operation) of the indoor units 3a, 3b, etc. steadily rises and, meanwhile, in the outdoor units 2a to 2c, the outdoor expansion valves 29a to 29c follow the startup of the constant capacity compressors 27a to 27c and 28a to 28c and the refrigerant pressure Pe in the outdoor heat exchangers 24a, 24b and 24c (which become expanders during heating operation) gradually decreases.

The predetermined amount of time Δt is set to 15 seconds or more, so the controllers 6a to 6c are capable of ensuring time for the outdoor expansion valves 29a to 29c of the outdoor units 2a to 2c to follow the startup of the constant capacity compressors 27a to 27c and 28a to 28c.

The controllers 6a to 6c of the individual outdoor units 2a to 2c perform startup of the variable capacity compressors 22a to 22c in time with the startup of the variable capacity compressors 22a to 22c of the other outdoor units 2a to 2c, so the controllers 6a to 6c are capable of quick capacity control.

### <Compressor Startup Method>

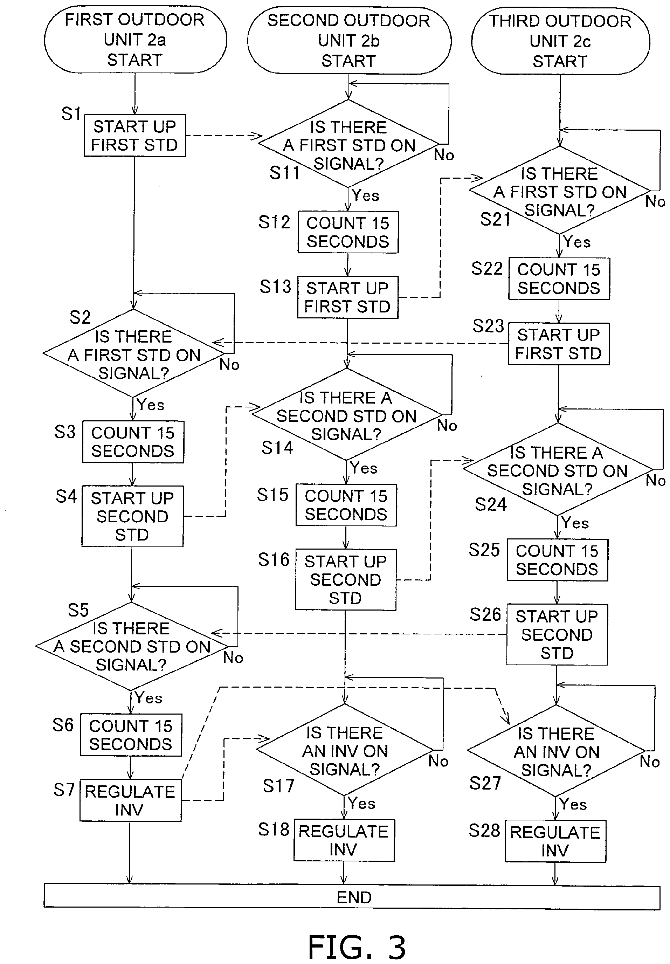

Next, a method of starting up the compressors (the variable capacity compressors 22a to 22c and the constant capacity compressors 27a to 27c and 28a to 28c) of the outdoor units 2a to 2c during heating operation will be described using the flowchart shown in FIG. 3. Here, in order to clarify operation of each of the outdoor units, the outdoor units 2a to 2c will be called a first outdoor unit 2a, a second outdoor unit 2b and a third outdoor unit 2c. Further, in the flowchart shown in FIG. 3, "First STD" corresponds to the constant capacity compressors 27a to 27c, "Second STD" corresponds to the constant capacity compressors 28a to 28c, and "INV" corresponds to the variable capacity compressors 22a to 22c.

First, when a signal to start heating operation is inputted to the controllers 6a to 6c of the first outdoor unit 2a, the second outdoor unit 2b and the third outdoor unit 2c, the controllers 6a to 6c cause the variable capacity compressors 22a to 22c to start up in a minimum operating capacity as preliminary operation. It will be noted that preliminary startup of the variable capacity compressors 22a to 22c may also be omitted. When preliminary startup is omitted, then it suffices for the controllers 6a to 6c to cause the variable capacity compressors 22a to 22c to start up beginning with later-described step S7 on.

As shown in the flowchart of FIG. 3, first, in step S1, the controller 6a of the first outdoor unit 2a causes the constant capacity compressor 27a of the first outdoor unit 2a to start up.

At this time, in step S11, the controller 6b of the second outdoor unit 2b determines whether or not the constant capacity compressor 27a of the first outdoor unit 2a has started up. When the controller 6b determines that the constant capacity compressor 27a has started up, then in step S12, the controller 6b counts 15 seconds in order to shift the timing with respect to the startup of the constant capacity compressor 27a immediately before. Thereafter, in step S 13, the controller 6b causes the constant capacity compressor 27b of the second outdoor unit 2b to start up.

At this time, in step S21, the controller 6c of the third outdoor unit 2c determines whether or not the constant capacity compressor 27b of the second outdoor unit 2b has started up. When the controller 6c determines that the constant capacity compressor 27b has started up, then in step S22, the controller 6c counts 15 seconds and thereafter, in step S23, causes the constant capacity compressor 27c of the third outdoor unit 2c to start up.

Next, in step S2, the controller 6a of the first outdoor unit 2a determines whether or not the constant capacity compressor 27c of the third outdoor unit 2c has started up. When the controller 6a determines that the constant capacity compressor 27c has started up, then in step S3, the controller 6a counts 15 seconds and thereafter, in step S4, causes the constant capacity compressor 28a of the first outdoor unit 2a to start up.

At this time, in step S 14, the controller 6b of the second outdoor unit 2b determines whether or not the constant capacity compressor 28a of the first outdoor unit 2a has started up. When the controller 6b determines that the constant capacity compressor 28a has started up, then in step S 15, the controller 6b counts 15 seconds and thereafter, in step S16, causes the constant capacity compressor 28b of the second outdoor unit 2b to start up.

At this time, in step S24, the controller 6c of the third outdoor unit 2c determines whether or not the constant capacity compressor 28b of the second outdoor unit 2b has started up. When the controller 6c determines that the constant capacity compressor 28b has started up, then in step S25, the controller 6c counts 15 seconds and thereafter, in step S26, causes the constant capacity compressor 28c of the third outdoor unit 2c to start up.

Next, in step S5, the controller 6a of the first outdoor unit 2a determines whether or not the constant capacity compressor 28c of the third outdoor unit 2c has started up. When the controller 6a determines that the constant capacity compressor 28c has started up, then in step S6, the controller 6a counts 15 seconds and thereafter, in step S7, regulates the operating frequency of the variable capacity compressor 22a of the first outdoor unit 2a so as to correspond to the operating capacities of the indoor units 3a, 3b, etc. Further, in conjunction with the variable capacity compressor 22a of the first outdoor unit 2a, the controllers 6b and 6c the regulate the operating frequencies of the variable capacity compressor 22b of the second outdoor unit 2b and the variable capacity compressor 22c of the third outdoor unit 2c so as to correspond to the operating capacities of the indoor units 3a, 3b, etc.

Specifically, in step S 17, the controller 6b of the second outdoor unit 2b determines whether or not the variable capacity compressor 22a of the first outdoor unit 2a has started up. When the controller 6b determines that the variable capacity compressor 22a has started up, then in step S 18, the controller 6b regulates the operating frequency of the variable capacity compressor 22b of the second outdoor unit 2b so as to correspond to the operating capacities of the indoor units 3a, 3b, etc.

Together with that, in step S27, the controller 6c of the third outdoor unit 2c determines whether or not the variable capacity compressor 22a of the first outdoor unit 2a has started up. When the controller 6c determines that the variable capacity compressor 22a has started up, then in step S28, the controller 6c regulates the operating frequency of the variable capacity compressor 22c of the third outdoor unit 2c so as to correspond to the operating capacity of the indoor units 3a, 3b, etc.

### <Operation of Air Conditioner 1>

Next, operation of the air conditioner 1 will be described using FIG. 1.

### <Normal Operation>

### (Heating Operation)

First, heating operation will be described. During heating operation, in all of the outdoor units 2a to 2c, the four-way switch valves 23a to 23c are in the state indicated by the dotted lines in FIG. 1, that is, a state where discharge sides of the compression mechanisms 21a to 21c are connected to the gas sides of the indoor heat exchangers 32a, 32b, etc. via the refrigerant gas communication pipe 5 and where the suction sides of the compression mechanisms 21a to 21c are connected to the gas sides of the outdoor heat exchangers 24a to 24c. Further, the liquid close valves 25a to 25c and the gas close valves 26a to 26c are opened, and the openings of the outdoor expansion valves 29a to 29c are regulated so as to depressurize the refrigerant.

In this state of a refrigerant circuit 7 of the air conditioner 1, when the outdoor fans (not shown) of the outdoor units 2a to 2c, the indoor fans (not shown) of the indoor units 3a, 3b, etc., and the compression mechanisms 21a to 21c are started up, refrigerant gas is sucked into the compression mechanisms 21a to 21c and compressed by the compression mechanisms 21a to 21c, merges together in the refrigerant gas communication pipe 5 via the four-way switch valves 23a to 23c of the outdoor units 2a to 2c, and is sent to the indoor units 3a, 3b, etc. Then, the refrigerant gas that has been sent to the indoor units 3a, 3b, etc. exchanges heat with the indoor air in the indoor heat exchangers 32a, 32b, etc and is condensed. This condensed refrigerant liquid merges together in the refrigerant liquid communication pipe 4 via the indoor expansion valves 31a, 31b, etc. and is sent to the outdoor units 2a to 2c. The refrigerant liquid flowing through the refrigerant liquid communication pipe 4 exchanges heat with the outdoor air in the outdoor heat exchangers 24a to 24c of the outdoor units 2a to 2c and is evaporated. This evaporated refrigerant gas is again sucked into the compression mechanisms 21a to 21c via the four-way switch valves 23a to 23c of the outdoor units 2a to 2c. In this manner, heating operation is performed.

### (Cooling Operation)

Next, cooling operation will be described. During cooling operation, in all of the outdoor units 2a to 2c, the four-way switch valves 23a to 23c are in the state indicated by the solid lines in FIG. 1, that is, a state where the discharge sides of the compression mechanisms 21a to 21c are connected to the gas sides of the outdoor heat exchangers 24a to 24c and where the suction sides of the compression mechanisms 21a to 21c are connected to the gas sides of the indoor heat exchangers 32a, 32b, etc. via the refrigerant gas communication pipe 5. Further, the liquid close valves 25a to 25c and the gas close valves 26a to 26c are opened, and the openings of the indoor expansion valves 31a, 31b, etc. are regulated so as to depressurize refrigerant.

In this state of the refrigerant circuit 7 of the air conditioner 1, when the outdoor fans (not shown) of the outdoor units 2a to 2c, the indoor fans (not shown) of the indoor units 3a, 3b, etc., and the compression mechanisms 21a to 21c are started up, refrigerant gas is sucked into the compression mechanisms 21a to 21c and compressed by the compression mechanisms 21a to 21c, is sent to the outdoor heat exchangers 24a to 24c via the four-way switch valves 23a to 23c, exchanges heat with the outdoor air, and is condensed. This condensed refrigerant liquid merges together in the refrigerant liquid communication pipe 4 and is sent to the indoor units 3a, 3b, etc. Then, the refrigerant liquid that has been sent to the indoor units 3a, 3b, etc. is depressurized in the indoor expansion valves 31a, 31b, etc., thereafter exchanges heat with the indoor air in the indoor heat exchangers 32a, 32b, etc., and is evaporated. This evaporated refrigerant gas is sent to the outdoor units 2a to 2c through the refrigerant gas communication pipe 5. The refrigerant gas flowing through the refrigerant gas communication pipe 5 passes through the four-way switch valves 23a to 23c of the outdoor units 2a to 2c and is thereafter again sucked into the compression mechanisms 21a to 21c. In this manner, cooling operation is performed.

### <Characteristics>

(1) In the air conditioner 1 of the embodiment, the controllers 6a to 6c sequentially cause the plural constant capacity compressors 27a to 27c and 28a to 28c to start up and thereafter regulate the operating frequencies of the variable capacity compressors 22a to 22c. Thus, the controllers 6a to 6c are capable of quickly performing startup of the variable capacity compressors 22a to 22c and the constant capacity compressors 27a to 27c and 28a to 28c in comparison to a conventional air conditioner.
   Further, in the air conditioner 1 of the embodiment, the controllers 6a to 6c sequentially cause the constant capacity compressors 27a to 27c and 28a to 28c to start up and thereafter regulate the operating frequencies of the variable capacity compressors 22a to 22c, so there is no worry that the refrigerant pressure will rise to a high pressure after the compressors are raised in an extremely high capacity or conversely that the refrigerant pressure will drop to a low pressure after the compressors are raised in an extremely low pressure. For that reason, even under a raise restriction based on the operating capacities of the indoor units, the controllers 6a to 6c are capable of quickly performing startup of the variable capacity compressors 22a to 22c and the constant capacity compressors 27a to 27c and 28a to 28c.
   Moreover, in the air conditioner 1 of the embodiment, the controllers 6a to 6c sequentially cause the constant capacity compressors 27a to 27c and 28a to 28c to start up and thereafter regulate the operating frequencies of the variable capacity compressors 22a to 22c, so the controllers 6a to 6c are capable of raising the operating frequencies of the variable capacity compressors 22a to 22c in order to avoid stalling of the variable capacity compressors 22a to 22c and the constant capacity compressors 27a to 27c and 28a to 28c.
(2) Moreover, in the air conditioner 1 of the embodiment, during heating operation of the air conditioner 1, the controllers 6a to 6c are capable of quickly starting up the constant capacity compressors 27a to 27c and 28a to 28c and the variable capacity compressors 22a to 22c, so the air conditioner 1 is capable of satisfying the demand of customers and the like who want the compressors to quickly start up during heating operation.
(3) In the air conditioner 1 of the embodiment, the controllers 6a to 6c set the interval between the startup of the constant capacity compressors 27a to 27c and the startup of the constant capacity compressors 28a to 28c to 15 seconds or more, so the controllers 6a to 6c are capable of ensuring time for the outdoor expansion valves 29a to 29c of the outdoor units 2a to 2c to follow the startup of the constant capacity compressors 27a to 27c and 28a to 28c.
   In particular, in a conventional air conditioner, there is the worry that the power source voltage will drop when the timings of the startup of plural constant capacity compressors overlap, but in the air conditioner 1 of the embodiment, the controllers 6a to 6c quickly sequentially cause the constant capacity compressors 27a to 27c and 28a to 28c to start up at 15-second intervals, so there is no worry that the power source voltage will drop.
(4) In the air conditioner 1 of the embodiment, the controllers 6a to 6c of the individual outdoor units 2a to 2c perform startup of the constant capacity compressors 27a to 27c and 28a to 28c at a timing that is shifted by the predetermined amount of time Δt (see FIG. 2) with respect to the startup of the constant capacity compressors 27a to 27c and 28a to 28c of the other outdoor units 2a to 2c, so even when the air conditioner 1 is disposed with the plural outdoor units 2a to 2c, the controllers 6a to 6c are capable of quickly performing startup of the variable capacity compressors 22a to 22c and the constant capacity compressors 27a to 27c and 28a to 28c.
(5) In the air conditioner 1 of the embodiment, the predetermined amount of time Δt is set to 15 seconds or more, so the controllers 6a to 6c are capable of ensuring time for the outdoor expansion valves 29a to 29c of the outdoor units 2a to 2c to follow the startup of the constant capacity compressors 27a to 27c and 28a to 28c.
(6) In the air conditioner 1 of the embodiment, the controllers 6a to 6c of the individual outdoor units 2a to 2c perform startup of the variable capacity compressors 22a to 22c in time with the startup of the variable capacity compressors 22a to 22c of the other outdoor units 2a to 2c, so the controllers 6a to 6c are capable of quick capacity control.

### <Modifications>

(A) In the embodiment, the air conditioner 1 that is disposed with the plural outdoor units 2a, 2b and 2c is cited as an example, and the controllers 6a to 6c of the individual outdoor units 2a to 2c perform startup of the constant capacity compressors 27a to 27c and 28a to 28c at a timing that is shifted by a predetermined amount of time with respect to the startup of the constant capacity compressors 27a to 27c and 28a to 28c of the other outdoor units 2a to 2c, but the present invention is not limited to this.
   As a modification, in the case of the air conditioner 1 that is disposed with just the one outdoor unit 2a, the controller 6a becomes capable of quickly causing the variable capacity compressor 22a and the constant capacity compressors 27a and 28a to start up by shifting the timing of the startup of the two constant capacity compressors 27a and 28b inside the outdoor unit 2a, causing the constant capacity compressors 27a and 28a to start up, and thereafter regulating the operating frequency of the variable capacity compressor 22a.
(B) In the embodiment, startup of the variable capacity compressor 22a and the constant capacity compressors 27a and 28a during heating operation has been described as an example, but the present invention is not limited to this. Even in the case of another operating mode (e.g., cooling operation) or the like, in the outdoor units 2a to 2c of the air conditioner 1 of the present invention, the controller 6a is capable of quickly performing startup of the variable capacity compressor 22a and the constant capacity compressors 27a and 28a.

### INDUSTRIAL APPLICABILITY

The present invention is applicable to an outdoor unit of an air conditioner that is disposed with plural constant capacity compressors and at least one variable capacity compressor.

## Claims

1. An outdoor unit (2a to 2c) of an air conditioner (1), the outdoor unit comprising:
plural constant capacity compressors (27a to 27c, 28a to 28c) that compress refrigerant in a predetermined capacity; and
a variable capacity compressor (22a to 22c) that is capable of having its capacity changed and compressing refrigerant; **characterized by** comprising
a controller (6a to 6c) that is configured to sequentially cause the plural constant capacity compressors (27a to 27c, 28a to 28c) to start up and to thereafter regulate the operating frequency of the variable capacity compressor (22a to 22c).

2. The outdoor unit (2a to 2c) of an air conditioner (1) of claim 1, wherein the controller (6a to 6c) is configured to set an interval of the startup of the plural constant capacity compressors (27a to 27c, 28a to 28c) to 15 seconds or more.

3. An air conditioner (1) disposed with plural outdoor units (2a to 2c) that include plural constant capacity compressors (27a to 27c, 28a to 28c) that compress refrigerant in a predetermined capacity, variable capacity compressors (22a to 22c) that are capable of having their capacities changed and compressing refrigerant and controllers (6a to 6c) that are configured to sequentially cause the plural constant capacity compressors (27a to 27c, 28a to 28c) to start up and to thereafter regulate the operating frequencies of the variable capacity compressor (22a to 22c),
wherein the controllers (6a to 6c) of the individual outdoor units (2a to 2c) are configured to perform startup of the constant capacity compressors (27a to 27c, 28a to 28c) at a timing that is shifted by a predetermined amount of time with respect to the startup of the constant capacity compressors (27a to 27c, 28a to 28c) of the other outdoor units (2a to 2c).

4. The air conditioner (1) of claim 3, wherein the predetermined amount of time is 15 seconds or more.

5. The air conditioner (1) of claim 3, wherein the controllers (6a to 6c) of the individual outdoor units (2a to 2c) are configured to perform startup of the variable capacity compressors (22a to 22c) in time with the startup of the variable capacity compressors (22a to 22c) of the other outdoor units (2a to 2c).

6. A compressor startup method in outdoor units (2a to 2c) of an air conditioner (1) that are disposed with plural constant capacity compressors (27a to 27c, 28a to 28c) and variable capacity compressors (22a to 22c), the method being **characterized by** comprising:
a first step that sequentially causes the plural constant capacity compressors (27a to 27c, 28a to 28c) to start up; and
a second step that regulates the operating frequencies of the variable capacity compressors (22a to 22c) after the first step.

## Patentansprüche

1. Außeneinheit (2a bis 2c) einer Klimaanlage (1), wobei die Außeneinheit Folgendes umfasst:
mehrere Konstantkapazitätskompressoren (27a bis 27c, 28a bis 28c), die Kältemittel in einer vorbestimmten Kapazität komprimieren; und
einen Wechselkapazitätskompressor (22a bis 22c), der in der Lage ist, seine Kapazität zu ändern und Kältemittel zu komprimieren; **dadurch gekennzeichnet, dass** er Folgendes umfasst
eine Steuerung (6a bis 6c), die konfiguriert ist, nacheinander die mehreren Konstantkapazitätskompressoren (27a bis 27c, 28a bis 28c) dazu zu bringen, zu starten und danach die Betriebsfrequenz des Wechselkapazitätskompressors (22a bis 22c) zu regeln.

2. Außeneinheit (2a bis 2c) einer Klimaanlage (1) nach Anspruch 1, wobei die Steuerung (6a bis 6c) konfiguriert ist, ein Intervall des Startens der mehreren Konstantkapazitätskompressoren (27a bis 27c, 28a bis 28c) mit 15 Sekunden oder mehr festzulegen.

3. Klimaanlage (1), die mit mehreren Außeneinheiten (2a bis 2c) angeordnet ist, die mehrere Konstantkapazitätskompressoren (27a bis 27c, 28a bis 28c), die Kältemittel in einer vorbestimmten Kapazität komprimieren, Wechselkapazitätskompressoren (22a bis 22c), die in der Lage sind, ihre Kapazitäten zu ändern, und Kältemittel zu komprimieren, und Steuerungen (6a bis 6c) enthalten, die konfiguriert sind, nacheinander die mehreren Konstantkapazitätskompressoren (27a bis 27c, 28a bis 28c) dazu zu bringen, zu starten und danach die Betriebsfrequenz des Wechselkapazitätskompressors (22a bis 22c) zu regeln,
wobei die Steuerungen (6a bis 6c) der einzelnen Außeneinheiten (2a bis 2c) konfiguriert sind, ein Starten der mehreren Konstantkapazitätskompressoren (27a bis 27c, 28a bis 28c) nach einem Zeitplan durchzuführen, der gegenüber dem Starten der Konstantkapazitätskompressoren (27a bis 27c, 28a bis 28c) der anderen Außeneinheiten (2a bis 2c) um eine vorbestimmte Zeitmenge versetzt ist.

4. Klimaanlage (1) nach Anspruch 3, wobei die vorbestimmte Zeitmenge 15 Sekunden oder mehr beträgt.

5. Klimaanlage (1) nach Anspruch 3, wobei die Steuerungen (6a bis 6c) der einzelnen Außeneinheiten (2a bis 2c) konfiguriert sind, ein Starten der Wechselkapazitätskompressoren (22a bis 22c) im Takt mit den Wechselkapazitätskompressoren (22a bis 22c) der anderen Außeneinheiten (2a bis 2c) durchzuführen.

6. Kompressorstartverfahren in Außeneinheiten (2a bis 2c) einer Klimaanlage (1), die mit mehreren Konstantkapazitätskompressoren (27a bis 27c, 28a bis 28c) und Wechselkapazitätskompressoren (22a bis 22c) angeordnet sind, wobei das Verfahren **dadurch gekennzeichnet ist, dass** es Folgendes umfasst:
einen ersten Schritt, der nacheinander die mehreren Konstantkapazitätskompressoren (27a bis 27c, 28a bis 28c) dazu bringt, zu starten; und
einen zweiten Schritt, der nach dem ersten Schritt die Betriebsfrequenzen der Wechselkapazitätskompressoren (22a bis 22c) regelt.

## Revendications

1. Unité extérieure (2a à 2c) d'un climatiseur (1), l'unité extérieure comprenant :
plusieurs compresseurs de capacité constante (27a à 27c, 28a à 28c) qui compriment un réfrigérant dans une capacité prédéterminée ; et
un compresseur de capacité variable (22a à 22c) dont la capacité peut être modifiée et qui est capable de comprimer un réfrigérant ; **caractérisée par le fait qu'**elle comprend :
un dispositif de commande (6a à 6c) qui est configuré pour déclencher de manière séquentielle le démarrage desdits plusieurs compresseurs de capacité constante (27a à 27c, 28a à 28c) et pour réguler par la suite la fréquence opérationnelle du compresseur de capacité variable (22a à 22c).

2. Unité extérieure (2a à 2c) d'un climatiseur (1) selon la revendication 1, dans laquelle le dispositif de commande (6a à 6c) est configuré pour régler un intervalle du démarrage desdits plusieurs compresseurs de capacité constante (27a à 27c, 28a à 28c) à 15 secondes ou plus.

3. Climatiseur (1) équipé de plusieurs unités extérieures (2a à 2c) qui comprennent plusieurs compresseurs de capacité constante (27a à 27c, 28a à 28c) qui compriment un réfrigérant dans une capacité prédéterminée, des compresseurs de capacité variable (22a à 22c) dont les capacités peuvent être modifiées et qui sont capables de comprimer un réfrigérant, et des dispositifs de commande (6a à 6c) qui sont configurés pour déclencher de manière séquentielle le démarrage desdits plusieurs compresseurs de capacité constante (27a à 27c, 28a à 28c) et pour réguler par la suite les fréquences opérationnelles du compresseur de capacité variable (22a à 22c) ;
dans lequel les dispositifs de commande (6a à 6c) des unités extérieures individuelles (2a à 2c) sont configurés pour mettre en oeuvre le démarrage des compresseurs de capacité constante (27a à 27c, 28a à 28c) à un moment qui est décalé d'un laps de temps prédéterminé par rapport au démarrage des compresseurs de capacité constante (27a à 27c, 28a à 28c) des autres unités extérieures (2a à 2c).

4. Climatiseur (1) selon la revendication 3, dans lequel le laps de temps prédéterminé est de 15 secondes ou plus.

5. Climatiseur (1) selon la revendication 3, dans lequel les dispositifs de commande (6a à 6c) des unités extérieures individuelles (2a à 2c) sont configurés pour mettre en oeuvre le démarrage des compresseurs de capacité variable (22a à 22c) de manière synchrone avec le démarrage des compresseurs de capacité variable (22a à 22c) des autres unités extérieures (2a à 2c).

6. Procédé de démarrage de compresseur dans des unités extérieures (2a à 2c) d'un climatiseur (1), qui sont équipées de plusieurs compresseurs de capacité constante (27a à 27c, 28a à 28c) et de compresseurs de capacité variable (22a à 22c), le procédé étant **caractérisé par le fait qu'**il comprend :
une première étape qui déclenche de manière séquentielle le démarrage desdits plusieurs compresseurs de capacité constante (27a à 27c, 28a à 28c) ; et
une deuxième étape qui régule les fréquences opérationnelles des compresseurs de capacité variable (22a à 22c) après la première étape.
